# EUROPEAN PATENT SPECIFICATION

(11) **EP 4 606 534 B1**
(45) Date of publication and mention of the grant of the patent: **26.08.2026**
(21) Application number: 24159755.8
(22) Date of filing: 26.02.2024
(51) Int. Cl.: B25J 9/16

(54) **DEVICE AND METHOD FOR NATURAL LANGUAGE CONTROLLED INDUSTRIAL ASSEMBLY ROBOTICS**
VORRICHTUNG UND VERFAHREN FÜR DURCH NATÜRLICHE SPRACHE GESTEUERTE ROBOTER FÜR INDUSTRIELLE MONTAGEN
DISPOSITIF ET PROCÉDÉ POUR ROBOTIQUE D'ASSEMBLAGE INDUSTRIEL COMMANDÉ EN LANGAGE NATUREL

(43) Date of publication of application: 27.08.2025
(73) Proprietor: Robert Bosch GmbH, 70442 Stuttgart (DE)
(72) Inventor: Lancewicki, Tal, Yavne (IL); Feldman, Zohar, 35705 Haifa (IL); Kozlovsky, Shir, 8548000 Sede Avraham (IL); Di Castro, Dotan, 3440619 Haifa (IL); Joglekar, Omkar, 6492105 Tel Aviv-Yafo (IL); Tchuiev, Vladimir, 3220614 Haifa (IL)

(56) References cited:
- PIERRE-LOUIS GUHUR ET AL: "Instruction-driven history-aware policies for robotic manipulations", ARXIV.ORG, CORNELL UNIVERSITY LIBRARY, 201 OLIN LIBRARY CORNELL UNIVERSITY ITHACA, NY 14853, 17 December 2022 (2022-12-17), XP091396275

## Description

The invention concerns a method for determining actions for controlling a robot, in particular an assembly robot, based on natural language prompts and based on an image of an environment of the robot.

### Prior art

Large Language Models (LLMs) and transformer-based vision models recently have enabled rapid development in the field of Vision-Language-Action models for robotic control. The main objective of these methods is to develop a generalist policy that can control robots in various environments. Policies are well-known from the field of reinforcement learning.

However, in industrial robotic applications such as automated assembly and disassembly, some tasks, such as insertion, demand greater accuracy and involve intricate factors like contact engagement, friction handling, and refined motor skills. Implementing these skills using a generalist policy is challenging because these policies might integrate further sensory data, e.g. including force or torque measurements, for enhanced precision. The publication PIERRE-LOUIS GUHUR ET AL: "Instruction-driven history-aware policies for robotic manipulations", ARXIV.ORG, CORNELL UNIVERSITY LIBRARY, 17 December 2022, is an example of application of machine learning to industrial robotic tasks.

One objective of the present invention is to provide a locally precise and a globally robust control policy for a finite set of skills that are specifically trained to perform high-precision tasks.

### Advantages of the invention

In industrial robotic assembly, some tasks, such as insertion, demand greater accuracy and involve intricate factors like contact engagement, friction handling, and refined motor skills. The advantage of the present method lies in the introduction of a global control policy based on LLMs that is able through dynamic context switching to transfer the control policy to a finite set of skills that are specifically trained to perform high-precision tasks. The ability to take up independently skill models is also an advantage. Furthermore, the integration of LLMs is not only advantageously for interpreting and processing language inputs but also for enriching the control mechanisms for diverse and intricate robotic operations.

### Disclosure of the invention

In a first aspect, a computer-implemented method of determining actions for controlling a robot, in particular an assembly robot, is proposed according to claim 1. Advantageously, the method is applied to assembly processes that require a sequence of skills. This is advantageous as the proposed method supports the prediction of intricate assembly processes that require a sequence of skills. For this purpose, after a completion of a skill, the model can predict a new skill as continuation of the process, which is similarly derived from the two inputs described (text, image). If for the purpose of inferring the next skill, the current state does not encapsulate all the information required (AKA the system is Markovian), one can add as inputs not only the last image but also additional images from history, eg which have been previously stored.

The method starts with receiving a first and second input, wherein the first input is a sentence describing a (assembly) task for the robot. The sentence can be a sentence in a natural language, also referred to as a natural language prompt. The task can be described by defining a goal or a (general) action that should be achieved or carried out by the robot. The second input is a sensor output, in particular an image, characterizing a current state of an environment of the robot.

Subsequently, the first and second input are feed into a first and second machine learning model, respectively. The first and second machine learning models are configured to determine tokens for their respective inputs. Tokens are machine understandable low dimensional representations of the inputs and can be also referred to as embeddings.

Subsequently, the determined tokens of the first and second machine learning models are grouped together also referred to as a concatenation.

Subsequently, the concatenated tokens are feed into a third machine learning model. The third machine learning model comprises two policies that are configured to output a skill action (*aₛ*) and a moving action (*aₘ*), respectively.

The skill action (*aₛ*) is a categorization or classification of high-level categorization of action. Preferably, the categories of the skills are independent from each other. The skill action (*aₛ*) can be understood as an identifier or pointer to the category of skill or action that will achieve the best result out of the set of skills. It is noted that said skills are not conditioned on the text instruction. The skill action (*aₛ*) directly can be used to fetch the appropriate skill or the method behind the skill to be executed. The high-level categories represent general actions, which the robot could carry out for the current state of the environment in order to fulfill its task according to the language prompt.

The skill action is determined based on the concatenated tokens. In case that read-out tokens are utilized, preferably, the skill action is only determined based on the outputted read-out tokens.

The moving action (*aₘ*) is an explicit movement proposal for the robot. Moving actions are movement information in which direction and preferably, by which distance the robot should move.

Subsequently, based on the skill action (*aₛ*) it is decided whether the moving action (*aₘ*) is outputted as action for the robot or a more precise movement proposal than the moving action (*aₘ*) for the action is provided from an external source. The external source can be a database comprising methods for determining precise movement proposals for the respective high-level categories. Said methods can be dedicated neural networks for their corresponding skill.

Preferably the method of the first aspect of the invention is used for a languagedriven robotic industrial assembly solution.

It is proposed that the external source comprises a set of specialized skills, wherein the specialized skills are methods configured to provide a movement proposal for the specific skill, wherein the specialized skills are provided with additional sensory input of the current state of the robot and of the environment of the robot.

Furthermore, it is proposed that the skill action (*aₛ*) comprises a list of different high-level action categories, wherein the high-level actions categories are Terminate, Moving according to the moving action (*aₘ*) and different predefined speziallied skills. The corresponding policy for the skill action can determine logits for each of the categories. The decision for the action can be carried out by taking the categrorie of the largest or smallest logits. Preferably, the specialized skills provide a greater accuracy and involve intricate factors like contact engagement, friction handling, and refined motor skills.

Furthermore, it is proposed that the during the concatenation of the tokens readout tokens are added. The read-out tokens can be determined by an additional transformer model with e.g. at least one regular transformer layer.

Embodiments of the invention will be discussed with reference to the following figures in more detail. The figures show:
- Figure 1: a schematic framework of an embodiment of a robotic assembly controll;
- Figure 2: a schematic centralized controller architecture;

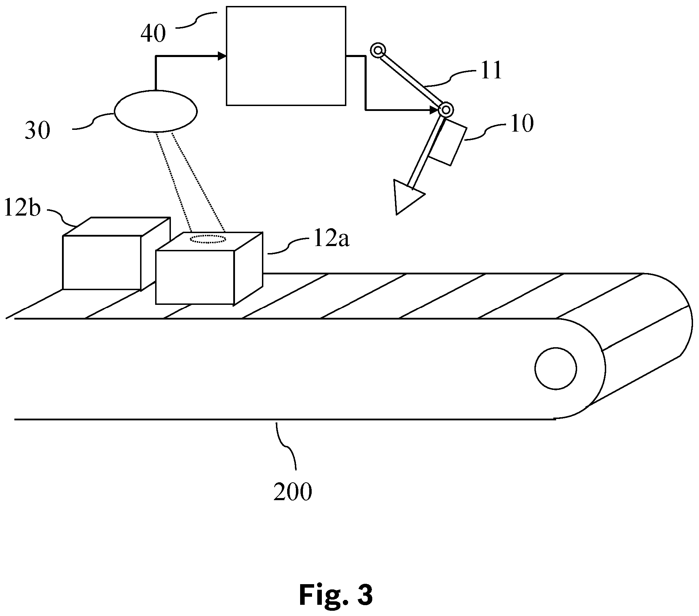

- Figure 3: a control system controlling a manufacturing machine;
- Figure 4: a training system.

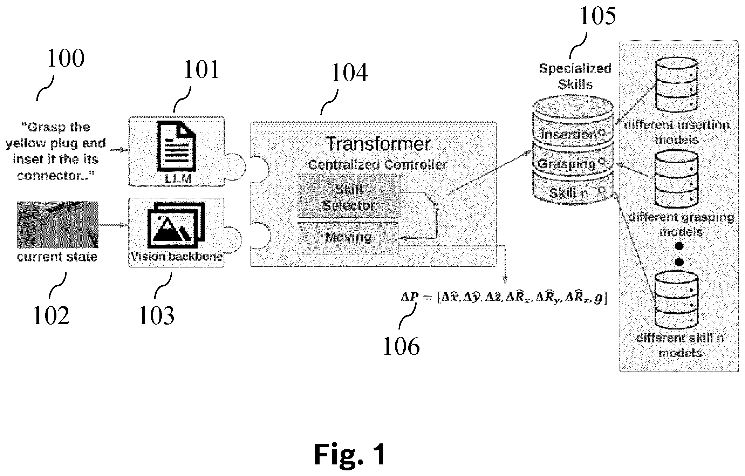

Figure 1 shows a user-friendly industrial assembly framework based on natural language prompting and LLMs, which is easily adaptable to new environments and modular in adding or adjusting components to meet specific needs. The modular nature is evident in the system's inputs and outputs. Regarding input flexibility, the model is designed to support various types of specialized skills' neural network models.

The shown framework of Fig. 1 presents an approach that processes natural language-based goals from an assembly pipeline, such as "Carefully grasp the yellow plug and insert it into the appropriate socket." (100) to output control instructions based on image observations. In principle, said framework comprises a centralized goal-conditioned model (104) that initiates readily available independent specialized skills (105), by handing over the control to specialized models based on context switching. The centralized module (104) is responsible for inferring the skill to be executed and moving the robot to an initial pose, enabling the specialized control model (skill model) to perform precise manipulation. Specifically, the centralized model (104) can output two control signals, namely (1) 6 Degree of Freedom (6DoF) pose for the default "move" action and (2) Skill-based context class.

The "skills" mentioned above can be small pre-trained networks specializing in fine-grained control tasks such as insertion. It is noted that other production task next to insertion are alternatively possible. The fine-grained skill "grasping for insertion" is utilized in the following as an example of specialized skill. The framework is modular in terms of the text and image encoders and the type of policy used (can be a simple Multi-Layer Perceptron). In addition, the framework is modular regarding specialized skills by simply fine-tuning the context classifier and calling the relevant policy to execute.

The centralized control model (104) is discussed in the following, employing a transformer architecture, which can adeptly switch between specialized control skills from a predefined set, guided by natural language objectives (100) and vision-based inputs (102).

This centralized controller fulfills two primary functions:
a. Direct the robot to a specified location based on the text prompts.
b. Identify and predict the necessary specialized skill, such as grasping or insertion, based on the textual prompt and the robot's current state.

The first function, which can be referred to as the general "moving" skill, doesn't necessitate a highly precise 6 Degrees of Freedom (6DoF) pose estimation. The specialized tasks mentioned in the second function demand greater accuracy and involve intricate factors like contact engagement, friction handling, and refined motor skills. Additionally, they might integrate further sensory data, including force or torque measurements, for enhanced precision. Distinct from the core model, these specialized skills are developed independently, for instance utilizing data specifically tailored to their requirements.

It can be assumed that these special skills work accurately, given that the robot meets certain constraints, e.g. such as being placed in an initial position that is in the proximity region of the manipulated object. The goal can be specified using a natural language prompt, for example, "Carefully grasp the yellow plug and insert it into the appropriate socket."

The transformer model accepts language instruction tokens (101) that are encoded by strong language models (101) such as T5 (http://arxiv.org/abs/1910.10683), BLIP (http://arxiv.org/abs/2201.12086.) and CLIP (ttp://arxiv.org/abs/2103.00020.), that are pre-trained, frozen, and specialize in text encoding, and generate text instruction tokens. In addition, it is proposed to use pre-trained vision encoders (103), such as ResNet-50 or ViT (http://arxiv.org/abs/2010.11929.), to generate vision tokens that embed information from the observations. Preferably, the input is padded with learnable "readout tokens", as described in Octo (https://octo-models.github.io.). The transformer can implement a Markovian policy, wherein the action depends solely on the current observation and is independent of past observations. In alignment with a dual-purpose model, it is possible to bifurcate the action into two categories: the skill action, denoted as *aₛ*, which pertains to the type of skill being executed, and the moving action, denoted as *aₘ*, which relates to the movement skill. The problem can be formally defined as follows: ${a}_{s} = {π}_{s} \left(s\right) ,$ ${a}_{m} = {π}_{m} \left(s\right) ,$ where s is the state vector that encodes information about the current state (*image*(*t*)) and the general text prompt.

Preferably, both policies (*πₛ*(*s*),*πₘ*(*s*)) largely share their weights and architecture but differ in their decoder models. Both policies mentioned can be deterministic and based on a Multi-Layer Perceptron(MLP) architecture. The policy π*ₛ* functions as a high-level controller, predicting the required skill by classifying predefined skills as follows:
0. Terminate
1. Moving (handled by the centralized controller)
2. Skill 1 (specialized)
3. Skill 2 (specialized)
4. Skill 3 (specialized)
5. etc.
n. Skill n (specialized)

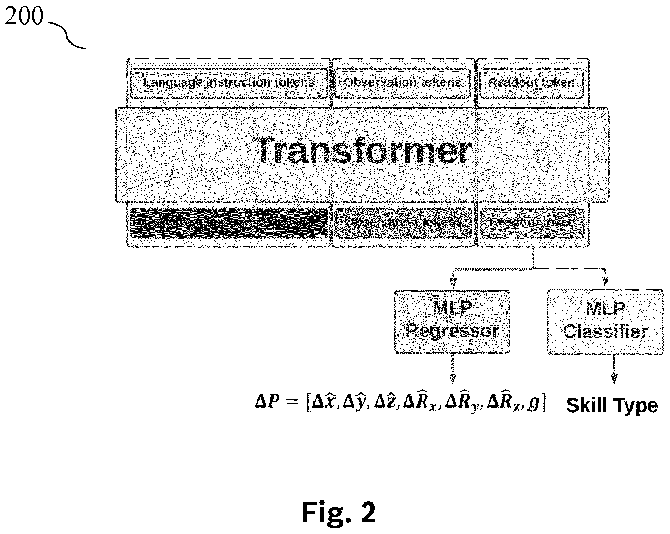

"Terminate" indicates that the robot has reached its goal per the provided text prompt. When *aₛ* = skill n, the control is handed over to the model specialized in skill n. When *aₛ* predicts the "moving" skill (denoted as "1"), the low-level controller's (π*ₘ*) action is executed. Additional specialized skills can be integrated by adding another context class and fine-tuning the classification head with data pertinent to the new skill. Figure 2 schematically shows said policies (200) by the transformer. The input of the transformer can be given by the previously determined tokens. The transformer can output transformed tokens. Preferably, the transformed read-out tokens are propagated through a MLP regressor and a MLP classifier to obtain the skill and moving action. In case that no read-out tokens are used, the regressor and classifier are applied to the language and/or observation tokens.

The action space of *aₘ* can be defined as a 7-dimensional vector, trained to predict a unit vector in the direction of the delta ground truth of the desired object or task using MSE loss. It is formulated as: $Δ P = \left[Δx,Δy,Δz,Δ{R}_{x},Δ{R}_{y},Δ{R}_{z},g\right]$

In this formulation, Δ*x,* Δ*y,* Δ*z* represent the translation components, while Δ*rₓ,* Δ*r_{y},* Δ*r_{z}* denote the orientation components represented in axis-angles, and *g* corresponds to the opening of the gripper. This 7-dimensional vector can be trained in a supervised manner using the Mean Squared Error (MSE) (*Lₘₛₑ*). Δ*P* is outputted as action (106) for the robot by the centralized controller (104) and can be directly used to control the robot. In general, the robot can comprise a gripper.

One can define *active domain* as the region that enables the successful execution of a specialized skill. The boundary of this active domain is assumed to be an abstract threshold ε. This threshold varies for different skills and is not solely dependent on distance. For instance, when guiding a grasped plug to a socket for insertion, the context should revert to the "grasping for insertion" specialized skill if the plug's position becomes unfavorable for insertion. A classifier head is trained to estimate this abstract threshold and facilitate context switching accordingly. This multi-class classifier head is trained using Categorical Cross Entropy loss (*L_{ce}*).

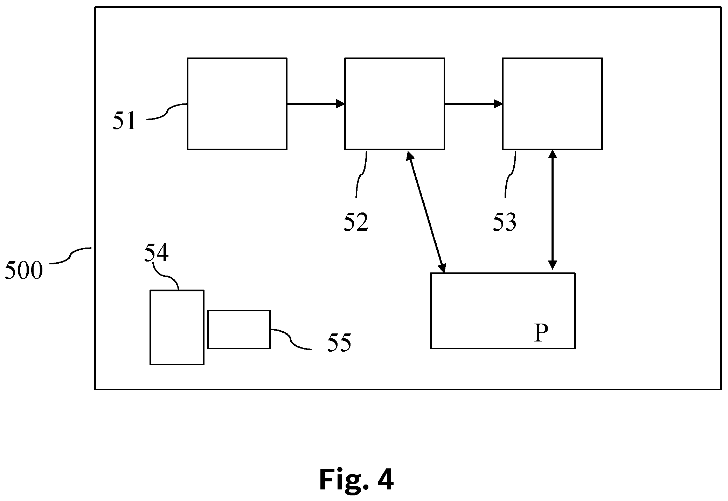

Shown in figure 4 is an embodiment in which control system 40 is used to control a manufacturing machine 11, e.g. a robot or a specific robot as a solder mounter, punch cutter, a cutter or a gun drill) of a manufacturing system 200, e.g. as part of an assembly line.

The control system 40 controls an actuator unit 10 which in turn control the manufacturing machine 11.

Sensor 30 may be given by an optical sensor which captures properties of e.g. a manufactured product 12. The actions 106 determined by the control system 40 can be applied to an actuator unit 10 which controls manufacturing machine 11 may then be controlled depending on the actions 106 to carry out a manufacturing step on a manufactured product 12a, 12b.

Shown in figure 5 is an embodiment of a training system 500. The training device 500 comprises a provider system 51, which provides inputs from a training data set. Inputs are fed to the framework 52 of Fig. 1 to be trained, which determines output variables from them. Output variables and input images are supplied to an assessor 53, which determines acute hyper/parameters therefrom, which are transmitted to the parameter memory P, where they replace the current parameters.

The procedures executed by the training device 500 may be implemented as a computer program stored on a machine-readable storage medium 54 and executed by a processor 55.

## Claims

1. A computer-implemented method of determining actions (106) for controlling a robot, in particular an assembly robot, comprising the steps of:
Receiving a first and second input, wherein the first input (100) is a sentence describing a task of the robot, wherein the second input (102) is a sensor output, in particular an image, characterizing a state of an environment of the robot;
Feeding the first and second input (100,102) into a first and second machine learning model (101,103) respectively, wherein the first and second machine learning models (101,103) are configured to determine tokens for their respective inputs;
Concatenating the determined tokens of the first and second machine learning models (101,103);
**characterised by**:
Feeding the concatenated tokens into a third machine learning model (104), wherein the third machine learning model (104) comprises two policies that are configured to output a skill action (*aₛ*) and a moving action (*aₘ*) respectively, wherein the skill action (*aₛ*) characterizes a categorization of different high-level action categories of the robot and the moving action (*aₘ*) is an explicit movement proposal for the robot;
Deciding based on the skill action (*aₛ*) whether the moving action (*aₘ*) is outputted as action (106) or a more precise movement proposal for the robot than the moving action (*aₘ*) as the action (106) is determined according to the high-level action category of the skill action (*aₛ*) from an external source.

2. The method according to claim 1, wherein the external source comprises a set of specialized skills (105) for the different high-level action categories, wherein the specialized skills (105) are methods configured to provide a movement proposal for the respective high-level action category based on a state of the current environment of the robot, wherein in particular the specialized skills (105) are provided with additional sensory input of a current state of the robot and of the state the environment.

3. The method according to claim 1 or 2, wherein the first machine learning model (101) is a pre-trained Large Language Model (LLM), and the second machine learning model (103) is a pre-trained vision encoder.

4. The method according to any of the preceding claims, wherein the third machine learning model (104) is a transformer model and the both policies share the transformer model as basis and differ by a regression head for outputting the moving action (*aₘ*) and a classification head for outputting the skill action (*aₛ*).

5. The method according to any of the preceding claims, wherein the skill action (*aₛ*) comprises a list of different high-level action categories, wherein the high-level actions categories are Terminate, Moving according to the moving action (*aₘ*) and different predefined speziallied skills.

6. The method according to any of the preceding claims, wherein during the concatenation of the tokens, additional read-out tokens are added.

7. The method according to any of the preceding claims, wherein a new specialized skill is added to the external source, wherein the different high-level action categories of the skill actions (*aₛ*) is expanded by an additional category for the new specialized skill, wherein the policy of the third machine learning model (104) for the skill action (*aₛ*) is retrained by finetuning.

8. The method according to any one of the preceding claims, wherein depending on the action (106) a control signal for the robot is determined, wherein preferably the robot is controlled to carry out the action (106) by the control signal.

9. The method according to any one of the preceding claims, wherein robot is a manufacturing machine (200) or an assembly robot.

10. Computer program that is configured to cause a computer to carry out the method according to any one of claims 1 to 9 with all of its steps when the computer program is carried out by a processor.

11. Machine-readable storage medium on which the computer program according to claim 10 is stored.

12. System comprising a robot and sensors sensing the state of the robot environment that is configured to carry out the method according to any one of claims 1 to 9.

## Patentansprüche

1. Computerimplementiertes Verfahren zum Bestimmen von Aktionen (106) zum Steuern eines Roboters, insbesondere eines Montageroboters, das die folgenden Schritte umfasst:
Empfangen einer ersten und einer zweiten Eingabe, wobei die erste Eingabe (100) ein Satz ist, der eine Aufgabe des Roboters beschreibt, wobei die zweite Eingabe (102) eine Sensorausgabe, insbesondere ein Bild, ist, die einen Zustand einer Umgebung des Roboters charakterisiert;
Einspeisen der ersten und der zweiten Eingabe (100,102) in ein erstes bzw. zweites Maschinenlernmodell (101,103), wobei das erste und das zweite Maschinenlernmodell (101,103) dazu ausgelegt sind, Tokens für ihre jeweiligen Eingaben zu bestimmen;
Verketten der bestimmten Tokens des ersten und des zweiten Maschinenlernmodells (101,103);
**gekennzeichnet durch**:
Einspeisen der verketteten Tokens in ein drittes Maschinenlernmodell (104), wobei das dritte Maschinenlernmodell (104) zwei Richtlinien umfasst, die dazu ausgelegt sind, eine Fertigkeitsaktion (aₛ) bzw. eine Bewegungsaktion (aₘ) auszugeben, wobei die Fertigkeitsaktion (aₛ) eine Kategorisierung verschiedener hochrangiger Aktionskategorien des Roboters charakterisiert und die Bewegungsaktion (aₘ) ein expliziter Bewegungsvorschlag für den Roboter ist;
Entscheiden basierend auf der Fertigkeitsaktion (aₛ), ob die Bewegungsaktion (aₘ) als Aktion (106) ausgegeben wird oder ein präziserer Bewegungsvorschlag für den Roboter als die Bewegungsaktion (aₘ) gemäß der hochrangigen Aktionskategorie der Fertigkeitsaktion (aₛ) aus einer externen Quelle als die Aktion (106) bestimmt wird.

2. Verfahren nach Anspruch 1, wobei die externe Quelle eine Menge spezialisierter Fertigkeiten (105) für die verschiedenen hochrangigen Aktionskategorien umfasst, wobei die spezialisierten Fertigkeiten (105) Verfahren sind, die dazu ausgelegt sind, einen Bewegungsvorschlag für die jeweilige hochrangige Aktionskategorie basierend auf einem Zustand der aktuellen Umgebung des Roboters bereitzustellen, wobei insbesondere die spezialisierten Fertigkeiten (105) mit zusätzlicher sensorischer Eingabe eines aktuellen Zustands des Roboters und des Zustands der Umgebung versehen sind.

3. Verfahren nach Anspruch 1 oder 2, wobei das erste Maschinenlernmodell (101) ein vortrainiertes großes Sprachmodell (LLM) ist und das zweite Maschinenlernmodell (103) ein vortrainierter Sichtcodierer ist.

4. Verfahren nach einem der vorhergehenden Ansprüche, wobei das dritte Maschinenlernmodell (104) ein Transformermodell ist und die beiden Richtlinien das Transformermodell gemeinsam als Grundlage nutzen und sich durch einen Regressionskopf zum Ausgeben der Bewegungsaktion (aₘ) und einen Klassifizierungskopf zum Ausgeben der Fertigkeitsaktion (aₛ) unterscheiden.

5. Verfahren nach einem der vorhergehenden Ansprüche, wobei die Fertigkeitsaktion (aₛ) eine Liste verschiedener hochrangiger Aktionskategorien umfasst, wobei die hochrangigen Aktionskategorien Beenden, Bewegen gemäß der Bewegungsaktion (aₘ) und verschiedene vordefinierte spezialisierte Fertigkeiten sind.

6. Verfahren nach einem der vorhergehenden Ansprüche, wobei während der Verkettung der Tokens zusätzliche Auslese-Tokens hinzugefügt werden.

7. Verfahren nach einem der vorhergehenden Ansprüche, wobei eine neue spezialisierte Fertigkeit zu der externen Quelle hinzugefügt wird, wobei die verschiedenen hochrangigen Aktionskategorien der Fertigkeitsaktionen (aₛ) um eine zusätzliche Kategorie für die neue spezialisierte Fertigkeit erweitert werden, wobei die Richtlinie des dritten Maschinenlernmodells (104) für die Fertigkeitsaktion (aₛ) durch Feinabstimmung erneut trainiert wird.

8. Verfahren nach einem der vorhergehenden Ansprüche, wobei in Abhängigkeit von der Aktion (106) ein Steuersignal für den Roboter bestimmt wird, wobei der Roboter vorzugsweise durch das Steuersignal gesteuert wird, um die Aktion (106) auszuführen.

9. Verfahren nach einem der vorhergehenden Ansprüche, wobei der Roboter eine Herstellungsmaschine (200) oder ein Montageroboter ist.

10. Computerprogramm, das dazu ausgelegt ist, zu bewirken, dass ein Computer das Verfahren nach einem der Ansprüche 1 bis 9 mit all seinen Schritten ausführt, wenn das Computerprogramm durch einen Prozessor ausgeführt wird.

11. Maschinenlesbares Speichermedium, in dem das Computerprogramm nach Anspruch 10 gespeichert ist.

12. System comprising a robot and sensors sensing the state of the robot environment that is configured to carry out the method according to any one of claims 1 to 9.

## Revendications

1. Procédé mis en œuvre par ordinateur de détermination d'actions (106) pour commander un robot, en particulier un robot d'assemblage, comprenant les étapes consistant à :
recevoir une première et une deuxième entrée, la première entrée (100) étant une phrase décrivant une tâche du robot, la deuxième entrée (102) étant une sortie de capteur, en particulier une image, caractérisant un état d'un environnement du robot ;
alimenter la première et la deuxième entrée (100, 102) dans un premier et un deuxième modèle d'apprentissage machine (101, 103) respectivement, les premier et deuxième modèles d'apprentissage machine (101, 103) étant configurés pour déterminer des jetons pour leurs entrées respectives ;
concaténer les jetons déterminés des premier et deuxième modèles d'apprentissage machine (101, 103) ;
**caractérisé par** :
l'alimentation des jetons concaténés dans un troisième modèle d'apprentissage machine (104), le troisième modèle d'apprentissage machine (104) comprenant deux politiques qui sont configurées pour fournir en sortie une action de compétence (aₛ) et une action mobile (aₘ) respectivement, l'action de compétence (aₛ) caractérisant une catégorisation de différentes catégories d'actions de haut niveau du robot et l'action mobile (aₘ) étant une proposition de déplacement explicite pour le robot ;
la décision, sur la base de l'action de compétence (aₛ), de si l'action mobile (aₘ) est fournie en sortie en tant qu'action (106) ou qu'une proposition de déplacement plus précise pour le robot que l'action mobile (aₘ) lorsque l'action (106) est déterminée selon la catégorie d'action de haut niveau de l'action de compétence (aₛ) à partir d'une source externe.

2. Procédé selon la revendication 1, dans lequel la source externe comprend un ensemble de compétences spécialisées (105) pour les différentes catégories d'actions de haut niveau, les compétences spécialisées (105) étant des procédés configurés pour fournir une proposition de déplacement pour la catégorie d'action de haut niveau respective sur la base d'un état de l'environnement actuel du robot, les compétences spécialisées (105) étant en particulier pourvues d'une entrée sensorielle supplémentaire d'un état actuel du robot et de l'état de l'environnement.

3. Procédé selon la revendication 1 ou la revendication 2, dans lequel le premier modèle d'apprentissage machine (101) est un grand modèle de langage (GML) pré-entraîné, et le deuxième modèle d'apprentissage machine (103) est un codeur de vision pré-entraîné.

4. Procédé selon l'une quelconque des revendications précédentes, dans lequel le troisième modèle d'apprentissage machine (104) est un modèle de transformateur et les deux politiques partagent le modèle de transformateur en tant que base et diffèrent par une tête de régression pour fournir en sortie l'action de déplacement (aₘ) et une tête de classification pour fournir en sortie l'action de compétence (aₛ).

5. Procédé selon l'une quelconque des revendications précédentes, dans lequel l'action de compétence (aₛ) comprend une liste de différentes catégories d'actions de haut niveau, les catégories d'actions de haut niveau étant Terminer, Se déplacer selon l'action de déplacement (aₘ) et différentes compétences spécialisées prédéfinies.

6. Procédé selon l'une quelconque des revendications précédentes, dans lequel pendant la concaténation des jetons, des jetons de lecture supplémentaires sont ajoutés.

7. Procédé selon l'une quelconque des revendications précédentes, dans lequel une nouvelle compétence spécialisée est ajoutée à la source externe, dans lequel les différentes catégories d'actions de haut niveau des actions de compétence (aₛ) sont étendues d'une catégorie supplémentaire pour la nouvelle compétence spécialisée, dans lequel la politique du troisième modèle d'apprentissage machine (104) pour l'action de compétence (aₛ) est réentraînée par affinage.

8. Procédé selon l'une quelconque des revendications précédentes, dans lequel en fonction de l'action (106), un signal de commande pour le robot est déterminé, dans lequel de préférence le robot est commandé pour exécuter l'action (106) par le signal de commande.

9. Procédé selon l'une quelconque des revendications précédentes, dans lequel le robot est une machine de fabrication (200) ou un robot d'assemblage.

10. Programme informatique qui est configuré pour amener un ordinateur à réaliser le procédé selon l'une quelconque des revendications 1 à 9 avec toutes ses étapes lorsque le programme informatique est exécuté par un processeur.

11. Support de stockage lisible par machine sur lequel est stocké le programme informatique selon la revendication 10.

12. Système comprenant un robot et des capteurs captant l'état de l'environnement robot configuré pour exécuter le procédé selon l'une quelconque des revendications 1 à 9.
